# EUROPEAN PATENT SPECIFICATION

(11) **EP 2 319 672 B1**
(45) Date of publication and mention of the grant of the patent: **22.03.2017**
(21) Application number: 10189940.9
(22) Date of filing: 04.11.2010
(51) Int. Cl.: B29C 43/02, B29D 11/00

(54) **Element array mold and use of such a lens array mold**
Pressform für eine Linsenanordnung und deren Verwendung
Moule de compression de réseau d'éléments et son usage

(30) Priority: 05.11.2009 JP 2009253993
(43) Date of publication of application: 11.05.2011
(73) Proprietor: FUJIFILM Corporation, Tokyo (JP)
(72) Inventor: Fujiwara, Takayuki, Saitama (JP); Watanabe, Seiichi, Saitama (JP)
(74) Representative: Klunker . Schmitt-Nilson . Hirsch

(56) References cited:
- EP-A1- 1 443 344
- EP-A1- 1 837 166
- EP-A1- 1 837 168
- GB-A- 1 395 203
- US-A- 6 007 746

## Description

### BACKGROUND

### 1. Technical Field

The present invention relates to an element array mold that molds an element array having a plurality of elements arranged therein and an element array molded by the element array mold.

### 2. Related Art

In recent years, the portable terminals of electronic apparatuses, such as mobile phones or PDAs (Personal Digital Assistants), include imaging units. In general, the imaging unit includes a solid-state imaging element, such as a CCD (Charge Coupled Device) image sensor or a CMOS (Complementary Metal-Oxide Semiconductor) image sensor, and a lens group for forming an image on the light receiving region of the solid-state imaging element.

With the wide spread of the portable terminals, there is a demand for high productivity of the imaging unit provided in the portable terminal. In order to meet the demand, a technique has been proposed which laminates a plurality of lens arrays obtained by collectively forming a plurality of lenses connected to each other and divides the laminate into a plurality of modules each having lens groups arranged in the lamination direction, thereby mass-producing lens modules (for example, see Patent Document 1 (WO 2008/1531 02)).

The documents EP-A-1 443 344, EP-A-1 837 166 and EP-A-1 837 168 disclose relevant lens array moulds comprising stoppers to regulate the gap between moulding surfaces.

In recent years, the number of pixels of the solid-state imaging element provided in the imaging unit has increased and the size of the pixels has been reduced. As a result, the lens provided in the imaging unit needs to have high accuracy in its shape. For example, the thickness of the lens requires micrometer (µm)-order accuracy.

### SUMMARY

In the technique disclosed in Patent Document 1, a photo-curable or thermosetting resin material between a pair of opposed molding surfaces of a pair of molds is compressed to mold a lens array. According to this structure, the thickness of the lens is determined by the gap between the molding surfaces, but Patent Document 1 does not disclose a means for regulating the gap. An error occurs in the gap between the molding surfaces depending on the attachment accuracy of the mold to the compressor for compressing the mold, which may result in a reduction in the accuracy of the lens thickness.

The invention has been made in order to solve the above-mentioned problems and an object of the invention is to collectively mold a plurality of elements with a desired thickness in an element array with high accuracy.

The objective of the invention is achieved by the element array mould and the use of the mould according to appended claims 1,14. Preferred embodiments are disclosed in the dependent claims.

According to an aspect of the invention, an element array mold includes a pair of molds, and compresses the molding material between a pair of opposite molding surfaces of the pair of molds to mold an element array having a plurality of elements arranged therein. A plurality of element molding portions for molding the elements is arranged in the pair of molding surfaces so as to be opposite to each other. The element array mold further includes at least one stopper that is provided in one of the molds or both of the molds so as to be interposed between the pair of molding surfaces and regulates the gap between the pair of molding surfaces.

According to the aspect of the invention, the gap between a pair of molding surfaces is regulated by a stopper and the gap between each set of the element molding portions opposite to each other is regulated. Therefore, it is possible to collectively mold a plurality of elements having a desired thickness with high accuracy.

### BRIEF DESCRIPTION OF THE DRAWINGS

Fig. 1 is a diagram illustrating an example of an element array for explaining an embodiment of the invention.
Fig. 2 is a cross-sectional view illustrating the element array taken along the line II-II of Fig. 1.
Fig. 3 is a diagram illustrating an example of an element array mold for explaining the embodiment of the invention.
Figs. 4A to 4C are diagrams illustrating a process of molding an element array used in the element array mold shown in Fig. 3.
Fig. 5 is a diagram illustrating another example of the element array mold for explaining the embodiment of the invention.
Fig. 6 is a diagram illustrating the arrangement of stoppers in the element array mold shown in Fig. 5.
Fig. 7 is a diagram illustrating a modification of the arrangement of the stoppers in the element array mold shown in Fig. 5.
Fig. 8 is a diagram illustrating a modification of the element array shown in Fig. 1.
Figs. 9A and 9B are diagrams sequentially illustrating a process of laminating a plurality of element arrays shown in Fig. 8 to form an element array laminate.
Fig. 10 is a diagram illustrating another example of the element array mold for explaining the embodiment of the invention.
Figs. 11A to 11C are diagrams illustrating an example of a method of manufacturing the element array mold shown in Fig. 10.
Figs. 12A and 12B are diagrams illustrating another example of the method of manufacturing the element array mold shown in Fig. 10.
Fig. 13 is a diagram illustrating another example of the element array mold for explaining the embodiment of the invention.
Fig. 14 is a diagram illustrating the arrangement of stoppers in the element array mold shown in Fig. 13.
Fig. 15 is a diagram illustrating a modification of the element array mold shown in Fig. 13.
Fig. 16 is a cross-sectional view illustrating the element array mold taken along the line XVI-XVI of Fig. 15.
Fig. 17 is a diagram illustrating an example of a method of manufacturing the element array mold shown in Fig. 15.
Fig. 18 is a diagram illustrating another example of the element array mold for explaining the embodiment of the invention.
Fig. 19 is a diagram illustrating a modification of the element array mold shown in Fig. 18.

### DETAILED DESCRIPTION

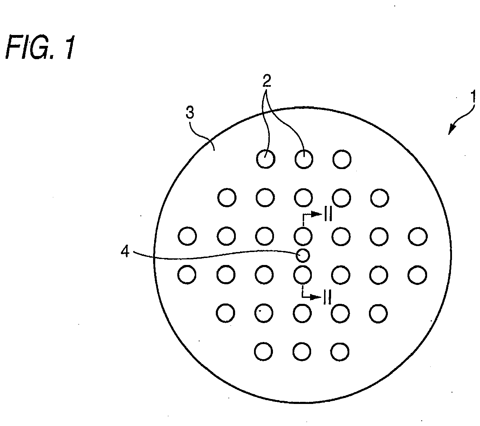

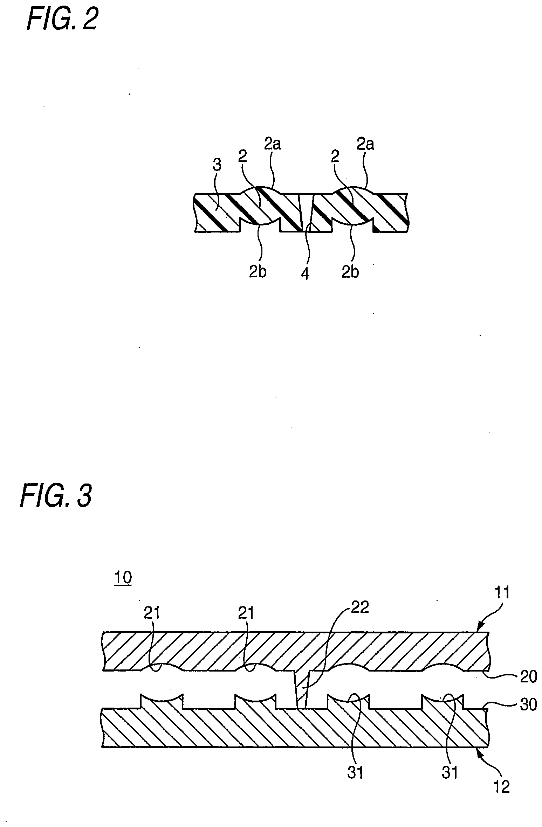

Figs. 1 and 2 show an example of an element array. The element array shown in Figs. 1 and 2 is a lens array.

As shown in Figs. 1 and 2, a lens array 1 includes a plurality of lenses 2 (a plurality of elements) and a connection portion 3.

In the example shown in Figs. 1 and 2, the plurality of lenses 2 is arranged in a grid. The arrangement of the lenses 2 is not limited to the grid, but the lenses 2 may be arranged in a radial shape or a concentric annular shape, or have other two-dimensional arrangements. In addition, the lenses 2 may have a one-dimensional arrangement.

Predetermined optical surfaces 2a and 2b are formed on the front and rear surfaces of the lens 2. In the example shown in Figs. 1 and 2, each of the optical surfaces 2a and 2b is a convex spherical surface. However, various combinations of a convex spherical surface, a concave spherical surface, an aspheric surface, and a plane may be used as the optical surfaces for the purpose of use.

The connection portion 3 is formed so as to fill up the gap between adjacent lenses 2 and connects the plurality of lenses 2. The connection portion 3 has a substantially disk shape as a whole.

A through hole 4 is formed in the connection portion 3 in the thickness direction. In the example shown in Figs. 1 and 2, the through hole 4 is formed at the center of the lens array 1.

The lenses 2 and the connection portion 3 are integrally formed of a transluscent resin composition. As a resin composition forming the lenses 2, for example, an energy-curable resin composition may be appropriately used. The energy-curable resin composition may be a resin composition cured by heat or a resin composition cured by active energy beams (for example, ultraviolet rays and electron beams).

Fig. 3 shows a mold for molding the lens array 1 shown in Fig. 1.

A mold 10 shown in Fig. 3 includes an upper mold 11 and a lower mold 12.

A plurality of lens molding portions 21 is arranged in a molding surface 20 of the upper mold 11 in the same grid pattern as that in which the lenses 2 of the lens array 1 are arranged. The lens molding portion 21 forms one optical surface 2a of the lens 2.

A stopper 22 is formed integrally with the molding surface 20 of the upper mold 11. The stopper 22 is formed at the center of the molding surface 20 and protrudes from the molding surface 20. In the example shown in Fig. 3, the stopper 22 is a pin that is tapered toward the leading end.

A plurality of lens molding portions 31 is arranged in a molding surface 30 of the lower mold 12 in the same grid pattern as that in which the lenses 2 of the lens array 1 are arranged. The lens molding portion 31 forms the other optical surface 2b of the lens 2.

A material forming the upper mold 11 and the lower mold 12 is appropriately selected according to the energy-curable resin material forming the lenses 2 or the connection portion 3. When a heat-curable resin material is used, the mold is made of, for example, a metal material having high thermal conductivity or a material that transmits infrared rays. When an ultraviolet-curable resin material is used, the mold is made of, for example, a material that transmits ultraviolet rays. When an electron-beam-curable resin material is used, the mold is made of a material that transmits electron beams.

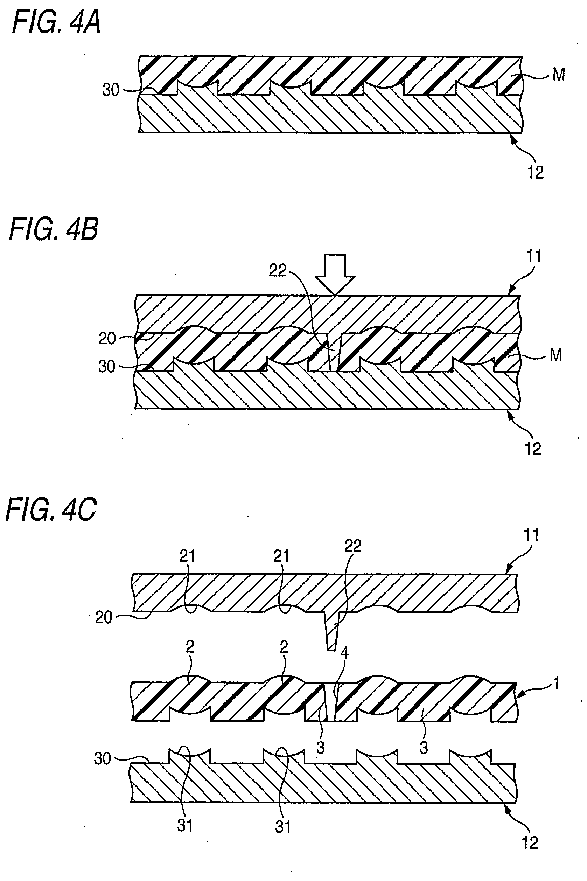

Figs. 4A to 4C show a process of molding the lens array 1 using the mold 10 shown in Fig. 3.

As shown in Fig. 4A, a resin material M forming the lenses 2 and the connection portion 3 is supplied onto the molding surface 30 of the lower mold 12.

Then, as shown in Fig. 4B, the upper mold 11 is moved down by a compressor (not shown) to compress the resin material M between the molding surface 20 of the upper mold 11 and the molding surface 30 of the lower mold 12, thereby deforming the resin material M along the shapes of the molding surfaces 20 and 30.

When the upper mold 11 is moved down, the leading end of the stopper 22 provided in the upper mold 11 comes into contact with the molding surface 30 of the lower mold 12. Then, the gap between the molding surface 20 of the upper mold 11 and the molding surface 30 of the lower mold 12 is uniquely determined and the gap between the sets of the lens molding portions 21 and 31 opposite to each other is regulated.

Then, as shown in Fig. 4C, energy is applied to the resin material M to cure it, thereby obtaining the lens array 1. The lens 2 is formed between each set of the lens molding portions 21 and 31 opposite to each other. The connection portion 3 is formed between the molding surfaces 20 and 30 except for the lens molding portions 21 and 31. In addition, the through hole 4 is formed by the stopper 22 of the upper mold 11.

The stopper 22 is tapered and has a draft. Therefore, it is easy to demold the lens array 1 from the upper mold 11. The draft is in the range of 0.2 degrees to 10 degrees, preferably in the range of 0.3 degrees to 5 degrees, and more preferably in the range of 0.5 degrees to 3 degrees. In addition, a mirror finish may be performed on the surface of the stopper 22 to reduce friction, thereby further improving the mold release performance. In the mirror finish, Rmax is equal to or less than 25 µm, preferably equal to or less than 6.3 µm, and more preferably equal to or less than 0.8 µm. Alternatively, a film made of a material with low affinity with the resin material M may be formed on the surface of the stopper 22 to further improve the mold release performance. For example, a fluorine-based mold release agent may be used as the material forming the film.

As such, the gap between the molding surfaces 20 and 30 is determined uniquely by the stopper 22 interposed between the molding surface 20 of the upper mold 11 and the molding surface 30 of the lower mold 12 and the gap between each set of the lens molding portions 21 and 31 opposite to each other is regulated. Therefore, it is possible to collectively mold a plurality of lenses 2 having a desired thickness with high accuracy.

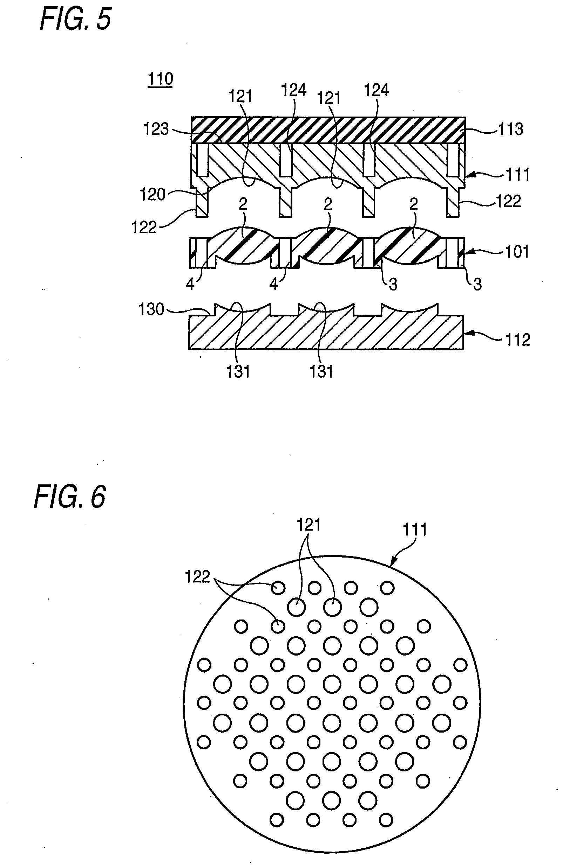

Fig. 5 shows another example of an element array mold.

A mold 110 shown in Fig. 5 includes an upper mold 111, a lower mold 112, and an elastic member 113. The mold 110 is for molding the lens array 101. The formed lens array 101 is similar to the lens array 1 shown in Fig. 1 except for the number of through holes 4 and the arragement thereof. In the lens array 101, the same components as those in the the lens array 1 are denoted by the same reference numerals and a description thereof will be omitted.

A plurality of lens molding portions 121 is arranged in a molding surface 120 of the upper mold 111 in the same grid pattern as that in which the lenses 2 of the lens array 101 are arranged. The lens molding portion 121 forms one optical surface 2a of the lens 2. In addition, a plurality of stoppers 122 is dispersed in the molding surface 120 of the upper mold 111.

A plurality of lens molding portions 131 is arranged in a molding surface 130 of the lower mold 112 in the same grid pattern as that in which the lenses 2 of the lens array 101 are arranged. The lens molding portion 131 forms the other optical surface 2b of the lens 2.

In the upper mold 111, grooves 124 are formed in each region between adjacent lens molding portions 121 in the outer surface 123 opposite to the molding surface 120. In this way, the entire upper mold 111 is flexible. That is, each of the lens molding portions 121 can be moved in the vertical direction (in a direction in which the lens molding portion faces the corresponding lens molding portion 131) relative to other lens molding portions 121. Since the plurality of grooves 124 is formed in the outer surface 123, it is possible to give flexibility to the upper mold 111 without any influence on the shape of the lens array 101.

The elastic member 113 is bonded to the outer surface 123 of the upper mold 111 and covers the entire outer surface 123. For example, a material, such as robber with high heat resistance, may be used as the elastic member 113.

Fig. 6 shows an example of the arrangement of a plurality of stoppers 122 in the mold 110.

As shown in Fig. 6, the stoppers 122 are provided at the grid points of the grid that individually separates the lens molding portions 121 arranged in a grid on the molding surface 120 of the upper mold 111. That is, at least one stopper 122 is provided around each lens molding portion 121.

A method of molding the lens array 101 using the mold 110 is the same as that of molding the lens array 1 using the mold 10. That is, the resin material M is supplied onto the molding surface 130 of the lower mold 112, and the resin material M between the molding surface 120 of the upper mold 111 and the molding surface 130 of the lower mold 112 is compressed to be deformed along the shapes of the molding surfaces 120 and 130. Then, energy is applied to the resin material M to cure it, thereby obtaining the lens array 101. Each lens 2 is formed between each set of the lens molding portions 121 and 131 opposite to each other. In addition, the connection portion 3 is formed between the molding surfaces 120 and 130 except for the lens molding portions 121 and 131. A plurality of through holes 4 is formed by a plurality of stoppers 122 of the upper mold 111.

The gap between the molding surface 120 and the molding surface 130 is determined uniquely by the stoppers 122 interposed between the molding surface 120 of the upper mold 111 and the molding surface 130 of the lower mold 112 and the gap between each set of the lens molding portions 121 and 131 opposite to each other is regulated. Therefore, it is possible to collectively mold a plurality of lenses 2 having a desired thickness with high accuracy.

The flatness of the molding surfaces 120 and 130 is likely to be reduced due to, for example, the processing strain of the upper mold 111 or the lower mold 112, the pressure deformation of the upper mold 111 or the lower mold 112 when the resin material M is compressed, and the thermal deformation of the upper mold 111 or the lower mold 112 when the resin material M is cured. In this case, the upper mold 111 is pressed by the compressor through the elastic member 113, and the pressure acts on the entire upper mold 111. Then, since the upper mold 111 is flexible, all of the plurality of stoppers 122 of the upper mold 111 reliably come into contact with the molding surface 130 of the lower mold 112. In this way, a variation in the gap between each set of the lens molding portions 121 and 131 due to the strain or deformation is corrected. As a result, it is possible to collectively mold a plurality of lenses 2 having a desired thickness with high accuracy.

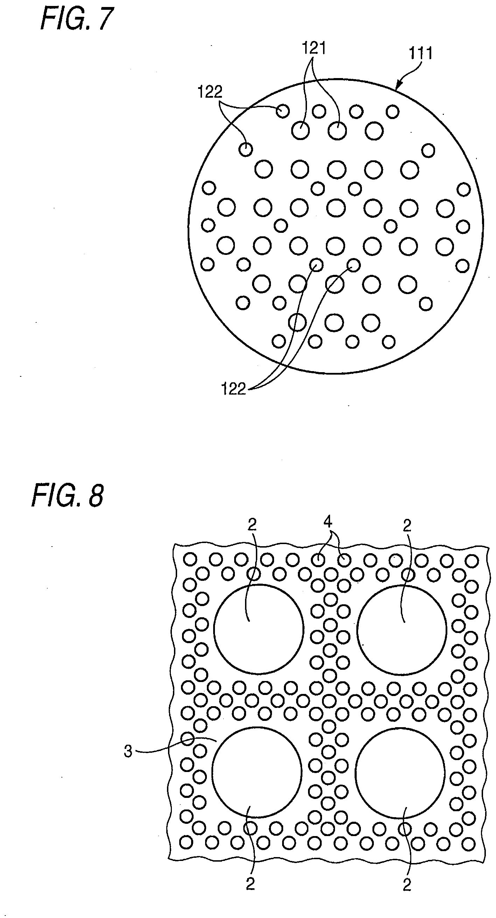

The plurality of stoppers 122 is provided at the grid points of the grid that individually separates the plurality of lens molding portions 121 arranged in a grid on the molding surface 120 of the upper mold 111. However, the stoppers 122 may be arranged at the maximum pitches capable of correcting a variation in the gap between each set of the lens molding portions 121 and 131 due to the strain or deformation. In the example shown in Fig. 7, the stoppers 122 are arranged in a substantially concentric annular shape. In this way, it is possible to reduce the number of stoppers 122.

The plurality of through holes 4 is formed in the connection portion 3 of the lens array molded by the mold 110 at positions corresponding to the plurality of stoppers 122 of the upper mold 111. A plurality of stoppers 122 may be formed on the upper mold 111, a plurality of through holes 4 may be formed in the connection portion 3, and the stoppers 122 and the through holes 4 may be conneced to each other such that a plurality of lenses 2 can be deformed in the direction in which the stoppers 122 and the through holes 4 are arranged. In the lens array 101 shown in Fig. 8, a plurality of through holes 4 is formed in a zigzag in the connection portion between adjacent lenses 2, and the plurality of lenses 2 can be deformed in the direction in which the through holes 4 are arranged by the contraction and expansion of the connection portion 3.

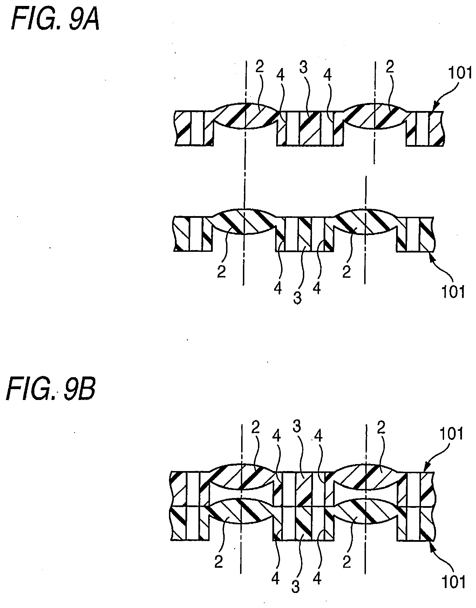

Figs. 9A and 9B show a process of laminating a plurality of lens arrays 101 shown in Fig. 8 to form a lens array laminate.

Fig. 9A shows two lens arrays 101 before they are laminated, in which the pitch between a plurality of lenses 2 of one of the two lens arrays 101 deviates from the pitch between a plurality of lenses 2 of the other lens array 101. Therefore, the optical axes of two lenses 2 arranged in the lamination direction also deviate from each other. Fig. 9B shows two lens arrays 101 after they are laminated. Each of the plurality of lenses 2 in each lens array 101 can be deformed in the direction in which the lenses 2 are arranged by the contraction and expansion of the connection portion 3. Therefore, when two lens arrays 101 are laminated, it is possible to align the optical axes of two lenses 2 arranged in the lamination direction.

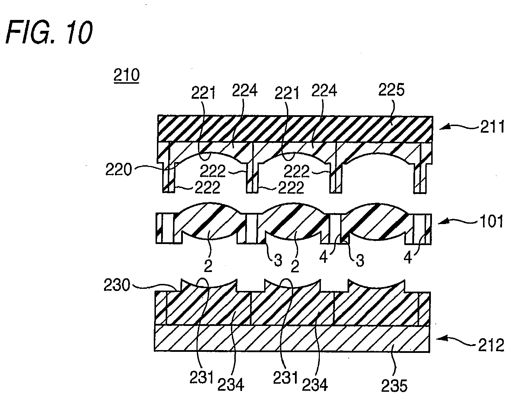

Fig. 10 shows another example of the element array mold.

A mold 210 shown in Fig. 10 includes an upper mold 211 and a lower mold 212. The mold 210 is for molding the lens array 101 shown in Fig. 5.

The upper mold 211 includes a plurality of mold members 224 and a substrate 225.

A lens molding portion 221 for molding one optical surface 2a of the lens 2 is formed on one surface of each mold member 224, and a stopper 222 is formed integrally with the lens molding portion 221 in the periphery of the lens molding portion 221. In the example shown in Fig. 10, two stoppers 222, which are pins, are provided at target positions of the lens molding portion 221. The mold members 224 are arranged on the substrate 225 in the same array as that in which a plurality of lenses 2 is arranged in the lens array 101 and are bonded to the substrate 225. A molding surface 220 of the upper mold 211 includes the surfaces of the plurality of mold members 224 and the surface of the substrate 225 exposed between the plurality of mold members 224.

The lower mold 212 includes a plurality of mold members 234 and a substrate 235.

A lens molding portion 231 for molding the other optical surface 2b of the lens 2 is formed on one surface of each mold member 234. The mold members 234 are arranged on the substrate 235 in the same array as that in which the plurality of lenses 2 is arranged in the lens array 101 and are bonded to the substrate 235. A molding surface 230 of the lower mold 212 includes the surfaces of the plurality of mold members 234 and the surface of the substrate 235 exposed between the plurality of mold members 234.

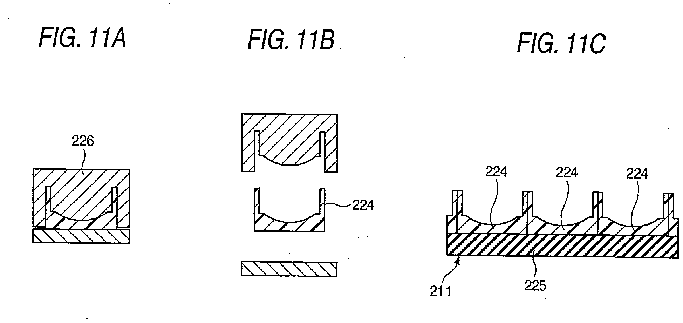

Figs. 11A to 11C show an example of a method of manufacturing the mold 210 shown in Fig. 10.

In the example shown in Figs. 11A to 11C, a plurality of mold members 224 is manufactured in advance by an appropriate method, such as injection molding or compression molding, using a master mold 226 and the mold members 224 are arranged on the substrate 225 to manufacture the upper mold 211. Similarly, a plurality of mold members 234 is manufactured in advance using the master mold and the mold members 234 are arranged on the substrate 235 to manufacture the lower mold 212.

A method of molding the lens array 101 using the mold 210 is the same as that of molding the lens array 1 using the mold 10. That is, the resin material M is supplied onto the molding surface 230 of the lower mold 212 and the resin material M interposed between the molding surface 220 of the upper mold 211 and the molding surface 230 of the lower mold 212 is compressed to be deformed along the shapes of the molding surfaces 220 and 230. In addition, energy is applied to the resin material M to cure it, thereby obtaining the lens array 101.

The gap between the molding surfaces 220 and 230 is determined uniquely by the stoppers 222 interposed between the molding surface 220 of the upper mold 211 and the molding surface 230 of the lower mold 212 and the gap between each set of the lens molding portions 221 and 231 opposite to each other is regulated. Therefore, it is possible to collectively mold a plurality of lenses 2 having a desired thickness with high accuracy.

For example, an elastic member, such as rubber with high heat resistance, is used as the substrate 225 of the upper mold 211 or the substrate 235 of the lower mold 212 such that the upper mold 211 or the lower mold 212 has flexibility. According to this structure, it is possible to correct a variation in the gap between each set of the lens molding portions 221 and 231 due to strain or deformation and thus collectively mold a plurality of lenses 2 having a desired thickness with high accuracy.

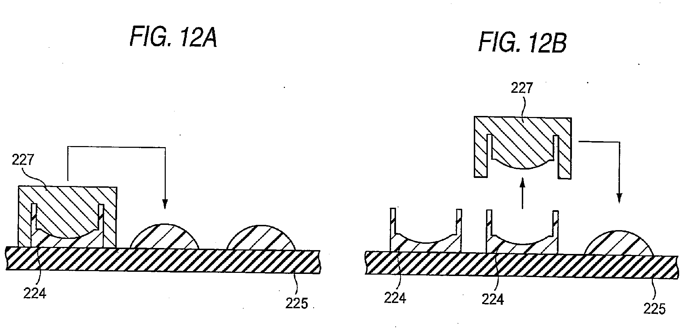

Figs. 12A and 12B show another example of the method of manufacturing the mold 210 shown in Fig. 10.

In the example shown in Figs. 12A and 12B, for example, a dispenser is used to supply a fixed amount of molding material to positions on the substrate 225 where each mold member 224 will be arranged. Then, a process of compressing the molding material between the substrate 225 and a master mold 227 to mold the mold member 224 is repeatedly performed while moving the master mold 227, thereby manufacturing the upper mold 211. Similarly, a process of compressing the molding material between the master mold and the substrate 235 using the master mold to mold the mold member 234 is repeatedly performed while moving the master mold, thereby manufacturing the lower mold 212.

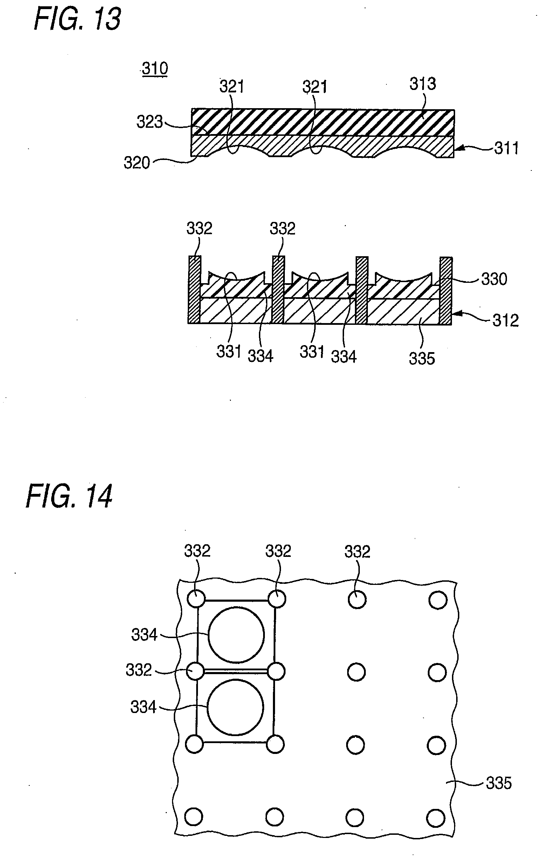

Fig. 13 shows another example of the element array mold.

A mold 310 shown in Fig. 13 includes an upper mold 311, a lower mold 312 and an elastic member 313. The mold 310 is for molding a lens array, and the molded lens array is the same as the lens array 101 as shown in Fig. 5. In the following description, the structure of the lens array 101 will be referred to appropriately.

The entire upper mold 311 is thin and flexible. A plurality of lens molding portions 321 is arranged in a molding surface 320 of the upper mold 311 in the same grid pattern as that in which a plurality of lenses 2 is arranged in the lens array 101. The lens molding portion 321 is for molding one optical surface 2a of the lens 2.

The elastic member 313 is bonded to the outer surface 323 of the upper mold 311 and covers the entire outer surface 323.

The lower mold 312 includes a plurality of mold members 334, a plurality of stoppers 332, and a substrate 335.

A lens molding portion 331 for molding the other optical surface 2b of the lens 2 is formed on one surface of each mold member 334. The mold members 334 are arranged on the substrate 335 in the same array as that in which a plurality of lenses 2 is arranged in the lens array 101 and are bonded to the substrate 335. A molding surface 330 of the lower mold 312 includes the surfaces of the plurality of mold members 334 and the surface of the substrate 335 exposed between the plurality of mold members 334.

Each of the stoppers 332 is fixed to the substrate 335 and protrudes from the molding surface 330. In the example shown in Fig. 13, each of the stoppers 332 is a pin. The stoppers 332 may be fixed to the substrate 335 with their lengths aligned with each other, or after the stoppers 332 are fixed to the substrate 335, for example, a grounding process may be performed on the stoppers 332 to align the lengths of the stoppers 332.

Fig. 14 shows the arrangement of the plurality of stoppers 332 in the mold 310 shown in Fig. 13.

The plurality of stoppers 332 is arranged on the substrate 335 to partition a region on the substrate 335 according to the arrangement of the plurality of mold members 334. In the example shown in Fig. 14, the stoppers 322 are provided at the grid points of the grid that individually separates the plurality of mold members 334 arranged in a grid. When the plurality of mold members 334 is manufactured in advance and is arranged on the substrate 335, it is possible to position the mold members 334 using the stoppers 332 and arrange the mold members 334 on the substrate 335.

A method of molding the lens array 101 using the mold 310 is the same as that of molding the lens array 1 using the mold 10. That is, the resin material M is supplied onto the molding surface 330 of the lower mold 312 and the resin material M interposed between the molding surface 320 of the upper mold 311 and the molding surface 330 of the lower mold 312 is compressed to be deformed along the shapes of the molding surfaces 320 and 330. In addition, energy is applied to the resin material M to cure it, thereby obtaining the lens array 101.

The gap between the molding surfaces 320 and 330 is determined uniquely by the stoppers 322 interposed between the molding surface 320 of the upper mold 311 and the molding surface 330 of the lower mold 312 and the gap between each set of the lens molding portions 321 and 331 opposite to each other is regulated. Therefore, it is possible to collectively mold a plurality of lenses 2 having a desired thickness with high accuracy.

The upper mold 311 is pressed by a compressor through the elastic member 313, and the pressure acts on the entire upper mold 311. Since the upper mold 311 is flexible, all of the plurality of stoppers 322 of the lower mold 312 reliably come into contact with the molding surface 320 of the upper mold 311. In this way, similar to the mold 110, a variation in the gap between each set of the lens molding portions 321 and 331 due to strain or deformation of the upper mold 311 or the lower mold 312 is corrected. As a result, it is possible to collectively mold a plurality of lenses 2 having a desired thickness with high accuracy. When the plurality of stoppers 332 is fixed to the substrates 335 and then the lengths of the stoppers 332 are aligned with each other, a variation in the thickness of the plurality of mold members 334 may be measured and the length of each stopper 332 may be corrected on the basis of the measurement result. In this case, it is possible to collectively mold a plurality of lenses 2 having a desired thickness with high accuracy.

In the above-mentioned example, the stoppers 332 provided in the lower mold 312 is formed separately from the mold members 334 of the lower mold 312 or the substrate 335 and thus the stoppers 332 may be made of various kinds of materials. However, it is preferable that the stoppers 332 be made of a material having low affinity with the resin material M forming the lens array 101. According to this structure, it is easy to demold the lens array 101 from the lower mold 312. For example, a fluorine-based material, such as tetrafluoroethylene, may be used as the material having low affinity with the resin material M. The entire stopper 332 may be made of the fluorine-based material or the surface of the stopper 332 may be covered with the fluorine-based material.

When a thermoplastic or thermosetting material is used as a molding material of the mold member 334, it is preferable to make the heat expansion/heat shrinkage characteristics of the stopper 332 equal to the heat expansion/heat shrinkage characteristics of the mold member 324. According to this structure, when the resin material M is cured, it is possible to continuously press the resin material M and prevent the shrinkage of the lens 2. The mold members 334 and the stoppers 332 may be made of, for example, the same material as the resin material M forming the lens array 101. When the surfaces of the mold members 334 and the stoppers 332 are covered with the fluorine-based material, it is possible to ensure the mold release performance of the lens array 101.

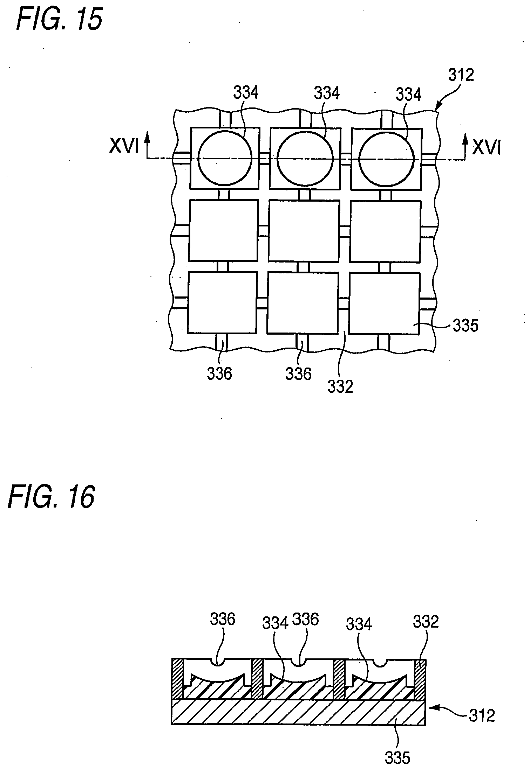

Figs. 15 and 16 show a modification of the mold 310 shown in Fig. 13. The modification is similar to the mold 310 shown in Fig. 13 except for the structure of the lower mold 312. Therefore, the upper mold 311 is not shown.

In the lower mold 312 shown in Figs. 15 and 16, stoppers 332 fixed to a substrate 335 serve as partition walls surroudning each of a plurality of mold members 334. A portion of the leading end of the stopper 332 between adjacent mold members 334 is cut out.

A method of molding the lens array using the mold 310 is the same as that of molding the lens array 1 using the mold 10. That is, the resin material M is supplied onto the molding surface 330 of the lower mold 312 and the resin material M interposed between the molding surface 320 (see Fig. 13) of the upper mold 311 and the molding surface 330 of the lower mold 312 is compressed to be deformed along the shapes of the molding surfaces 320 and 330. In addition, energy is applied to the resin material M to cure it, thereby obtaining the lens array 101. A plurality of lenses 2 is connected to each other by the connection portion 3 obtained by curing the resin material M in cut-out portions 336.

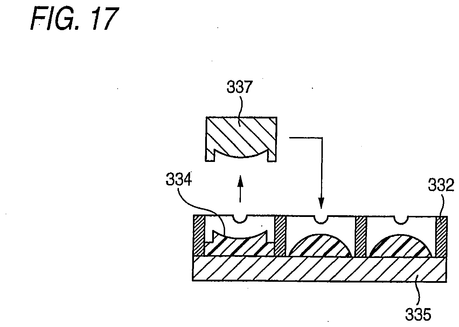

Fig. 17 shows an example of a method of manufacturing the mold 310 shown in Fig. 15.

As shown in Fig. 17, the position where each mold member 334 will be provided on the substrate 335 is surrounded by the stopper 332 and a fixed amount of molding material is supplied to the surrounded position by, for example, a dispenser. Then, a process of compressing the molding material between the substrate 335 and a master mold 337 to mold the mold members 334 is repeately performed while moving the master mold 337, thereby manufacturing the lower mold 312. As such, since the position where each mold member 334 will be provided on the substrate 335 is surrounded by the stopper 332, it is possible to use a molding material with very low viscosity and high wettability for the substrate 335.

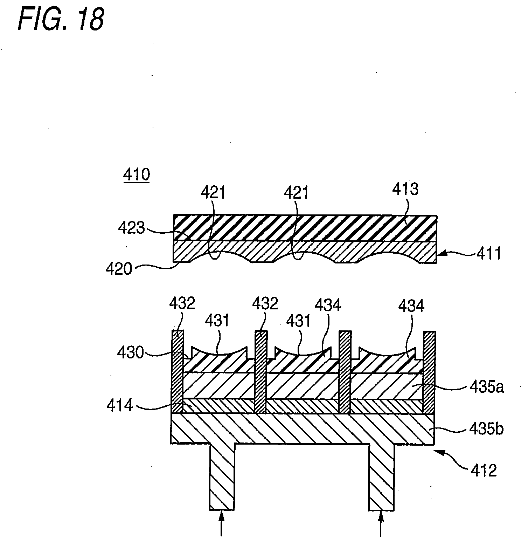

Fig. 18 shows another example of the element array mold.

A mold 410 shown in Fig. 18 includes an upper mold 411, a lower mold 412, and an elastic member 413. The mold 410 is for molding the lens array 101 shown in Fig. 5. In the following description, the structure of the lens array 101 will be referred to appropriately.

The entire upper mold 411 is thin and flexible. A plurality of lens molding portions 421 is arranged in a molding surface 420 of the upper mold 411 in the same grid pattern as that in which a plurality of lenses 2 is arranged in the lens array 101. The lens molding portion 421 is for molding one optical surface 2a of the lens 2.

The elastic member 413 is bonded to the outer surface 423 of the upper mold 411 and covers the entire outer surface 423.

The lower mold 412 includes a plurality of mold members 434, a plurality of stoppers 432, a first substrate 435a, and a second substrate 435b that is provided below the first substrate 435a.

A lens molding portion 431 for molding the other optical surface 2b of the lens 2 is formed on one surface of each mold member 434. The mold members 434 are arranged on the first substrate 435a in the same grid pattern as that in which a plurality of lenses 2 is arranged in the lens array 101 and are bonded to the first substrate 435a. A molding surface 430 of the lower mold 412 includes the surfaces of the plurality of mold members 434 and the surface of the first substrate 435a exposed between the plurality of mold members 434.

The plurality of stoppers 432 is arranged so as to be dispersed in the second substrate 435b and is fixed to the second substrate 435b. Each of the stoppers 432 passes through the first substrate 435a and protrudes from the molding surface 430.

The first substrate 435a and the second substrate 435b can be moved relative to each other in the direction in which they are laminated. Therefore, the amount of protrusion of each stopper 432 from the molding surface 430 is adjusted by interposing spacers 414 between the first substrate 435a and the second substrate 435b. In this way, in the molding of the lens array 101 using the mold 410, it is possible to adjust the gap between the molding surfaces 420 and 430 to regulate the gap between each set of the lens molding portions 421 and 431 opposite to each other in various ways.

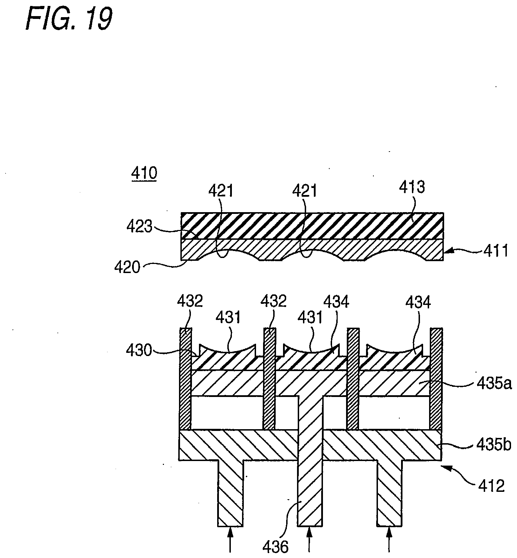

Fig. 19 shows a modification of the mold 410 shown in Fig. 18.

In the mold 410 shown in Fig. 19, a supporting rod 436 passing through the second substrate 435b is provided on the first substrate 435a. It is possible to press the first substrate 435a independently from the second substrate 435b using the supporting rod 436. According to this structure, when the resin material M forming the lens array 101 is cured, it is possible to continuously press the resin material M and prevent shrinkage of the lenses 2.

## Claims

1. An element array mold that compresses a molding material between a pair of opposite molding surfaces of a pair of molds to mold an element array having a plurality of elements arranged therein, comprising:
the pair of molds (411, 412);
a plurality of element molding portions (421, 431) that is used to mold the elements and is provided in each of the pair of molding surfaces (420, 430) so as to be opposite to each other; and
at least one stopper (432) that is provided in one of the molds (411, 412) or both of the molds so as to be interposed between the pair of molding surfaces and regulates a gap between the pair of molding surfaces,
**characterized in that**
the mold (411, 412) having the stopper (432) provided therein includes a plurality of mold members (434) each having the element molding portion (431 ), a first substrate (435a) having the plurality of mold members (434) arranged therein, and a second substrate (435b) formed below the first substrate,
the stopper (432) passes through the first substrate (435a) and is fixed to the second substrate (435b), and
the first substrate (435a) and the second substrate (435b) are moveable relative to each other in a direction in which the first substrate and the second substrate are laminated.

2. The element array mold according to claim 1,
wherein a plurality of the stoppers (432) is provided,
the stoppers (432) are arranged so as to be dispersed between the pair of molding surfaces, and
at least one of the molds is flexible, and a surface opposite to the molding surface of the flexible mold is supported by an elastic member (413).

3. The element array mold according to claim 2,
wherein grooves are formed in a region between adjacent element molding portions in the surface opposite to the molding surface in the flexible mold.

4. The element array mold according to claim 1,
wherein the mold having the stopper provided therein includes a plurality of mold members each having the element molding portion and a substrate having the plurality of mold members arranged therein, and
the stopper is formed integrally with each of the plurality of mold members.

5. The element array mold according to claim 1,
wherein the mold having the stopper provided therein includes a plurality of mold members each having the element molding portion and a substrate having the plurality of mold members arranged therein, and
the stopper is fixed to the substrate.

6. The element array mold according to claim 5,
wherein the stoppers are provided on the substrate so as to partition a region on the substrate according to the arrangement of the plurality of mold members, and
each of the plurality of mold members is positioned by the stoppers.

7. The element array mold according to claim 6,
wherein the stoppers are partition walls surrounding each of the plurality of mold members.

8. The element array mold according to claim 7,
wherein a cut-out portion is provided at the leading end of a portion of each partition wall between adjacent mold members.

9. The element array mold according to any one of claims 5 to 8,
wherein the heat expansion/shrinkage characteristics of the stopper (432) are equal to the heat expansion/shrinkage characteristics of the mold member.

10. The element array mold according to any one of claims 1 to 9,
wherein the stopper has a draft.

11. The element array mold according to any one of claims 1 to 10,
wherein a mirror finish is performed on the surface of the stopper.

12. The element array mold according to any one of claims 1 to 11,
wherein a film having low affinity with the molding material is formed on the surface of the stopper.

13. The element array mold according to any one of claims 1 to 11,
wherein the stopper is made of a material having low affinity with the molding material.

14. The use of an element array molded by the element array mold according to any one of claims 1 to 13,
comprising the step of moving at least one of the molds (411,412) in order to compress resin material between the molding surfaces (420,430), until the leading end of the stopper (432) comes into contact with the molding surface of the mold opposite to the stopper.

## Patentansprüche

1. Pressform für eine Elementenanordnung, die ein Formmaterial zwischen einem Paar einander gegenüberliegender Formflächen eines Paares von Formteilen zusammenpresst, um eine Elementenanordnung mit mehreren darin angeordneten Elementen zu formen, umfassend:
das Paar von Formhälften (411, 412);
eine Mehrzahl von Elementen-Formabschnitten (421, 431), dazu verwendet, die Elemente zu formen und in jedem von dem Paar von Formflächen (420, 430) einander gegenüberliegend vorgesehen; und
mindestens einen Anschlag (432), der an einer der Formhälften (411, 412) oder an beiden Formhälften vorgesehen ist, um zwischen den paarweisen Formflächen zu liegen und eine Lücke zwischen den paarweisen Formflächen zu regulieren,
**dadurch gekennzeichnet, dass**
die Formhälfte (411, 412) mit dem darin befindlichen Anschlag (432) mehrere Formglieder (434) mit jeweils dem Elementenformabschnitt (431), einem ersten Substrat (435a) mit den mehreren darin angeordneten Formgliedern (434) und einem zweiten Substrat (435b) unterhalb des ersten Substrats aufweist,
der Anschlag durch das erste Substrat (435a) hindurchtritt und an dem zweiten Substrat (435b) befestigt ist, und
das erste Substrat (435a) und das zweite Substrat (435b) relativ zueinander in einer Richtung bewegbar sind, in welcher das erste Substrat und das zweite Substrat laminiert sind.

2. Pressform nach Anspruch 1,
bei der mehrere Anschläge (432) vorgesehen sind,
die Anschläge (432) derart angeordnet sind, dass sie zwischen dem Paar von Formflächen verteilt sind, und
mindestens eine der Formhälften flexibel ist, wobei eine der Formfläche der flexiblen Formhälfte gegenüberliegende Fläche von einem elastischen Glied (413) gehalten wird.

3. Pressform nach Anspruch 2,
bei der in einer Zone zwischen benachbarten Elementen-Formabschnitten in der der Formfläche in der flexiblen Formhälfte gegenüberliegenden Fläche Nuten ausgebildet sind.

4. Pressform nach Anspruch 1,
bei der die Formhälfte mit dem darin befindlichen Anschlag mehrere Formglieder enthält, die jeweils den Elementen-Formabschnitt und ein Substrat mit den mehreren darin angeordneten Formgliedern enthalten, und
der Anschlag einstückig mit jedem der mehreren Formglieder ausgebildet ist.

5. Pressform nach Anspruch 1,
bei der die mit dem Anschlag versehene Formhälfte eine Mehrzahl von Formgliedern enthält, die jeweils den Elementen-Formabschnitt und ein Substrat mit den mehreren darin angeordneten Formgliedern aufweisen, und
der Anschlag an dem Substrat fixiert ist.

6. Pressform nach Anspruch 5,
bei der die Anschläge an dem Substrat vorgesehen sind, um eine Zone auf dem Substrat entsprechend der Anordnung der mehreren Formglieder abzuteilen, und
jedes der mehreren Formglieder durch die Anschläge positioniert ist.

7. Pressform nach Anspruch 6,
bei der die Anschläge Trennwände sind, die jedes der mehreren Formglieder umgeben.

8. Pressform nach Anspruch 7,
bei der ein Ausschnitt am führenden Ende eines Abschnitts jeder Trennwand zwischen benachbarten Formgliedern vorgesehen ist.

9. Pressform nach einem der Ansprüche 5 bis 8,
bei der die Wärmeausdehnungs-/-Schrumpfkennwerte des Anschlags (432) gleich sind den Wärmeausdehnungs-/-Schrumpfkennwerten des Formglieds.

10. Pressform nach einem der Ansprüche 1 bis 5,
bei der der Anschlag eine Konizität aufweist.

11. Pressform nach einem der Ansprüche 1 bis 10,
bei der an der Oberfläche des Anschlags eine Spiegeloberfläche ausgebildet ist.

12. Pressform nach einem der Ansprüche 1 bis 11,
bei der eine Schicht mit geringer Affinität bezüglich des Formwerkstoffs an der Oberfläche des Anschlags ausgebildet ist.

13. Pressform nach einem der Ansprüche 1 bis 11,
bei der der Anschlag aus einem Werkstoff gefertigt ist, der eine geringe Affinität bezüglich des Formmaterials aufweist.

14. Verwendung einer Elementenanordnung, die von der Pressform nach einem der Ansprüche 1 bis 13 geformt wurde,
umfassend den Schritt des Bewegens mindestens einer der Formhälften (411, 412), um Harzmaterial zwischen den Formflächen (420, 430) zusammenzupressen, bis das führende Ende des Anschlags (432) in Berührung mit der Formfläche der dem Anschlag gegenüberliegenden Form in Berührung tritt.

## Revendications

1. Moule pour réseau d'éléments qui comprime un matériau de moulage entre une paire de surfaces de moulage opposées d'une paire de moules, afin de mouler un réseau d'éléments présentant une pluralité d'éléments agencés dans celui-ci, comprenant :
la paire de moules (411, 412) ;
une pluralité de portions de moulage d'éléments (421, 431) utilisée pour mouler les éléments et fournie dans chacune de la paire de surfaces de moulage (420, 430) de manière à être face à face entre elles, et
au moins une butée (432) prévue dans l'un des moules (411, 412) ou les deux moules, de manière à être intercalée entre la paire de surfaces de moulage et régulant un espace entre la paire de surfaces de moulage,
**caractérisé en ce que**
le moule (411, 412) présentant la butée (432) fournie à l'intérieur inclut une pluralité de pièces de moule (434), chacune présentant la portion de moulage d'éléments (431), un premier substrat (435a) présentant la pluralité de pièces de moule (434) agencés à l'intérieur, et un second substrat (435b) formé au-dessous du premier substrat ;
la butée (432) passe à travers le premier substrat (435a) et est fixée au second substrat (435b), et
le premier substrat (435a) et le second substrat (435b) peuvent être déplacés l'un par rapport à l'autre dans une direction dans laquelle le premier substrat et le second substrat sont laminés.

2. Moule pour réseau d'éléments selon la revendication 1,
dans lequel une pluralité de butées (432) est prévue,
les butées (432) sont agencées de manière à être dispersées entre la paire de surfaces de moulage, et
au moins un des moules est flexible, et une surface face à la surface de moulage du moule flexible est supportée par une pièce élastique (413).

3. Moule pour réseau d'éléments selon la revendication 2,
dans lequel des rainures sont formées dans une région entre des portions de moulage d'éléments adjacentes dans la surface face à la surface de moulage dans le moule flexible.

4. Moule pour réseau d'éléments selon la revendication 1,
dans lequel le moule présentant la butée fournie à l'intérieur de celui-ci inclut une pluralité de pièces de moule, chacune présentant la portion de moulage d'éléments et un substrat présentant la pluralité de pièces de moule agencées à l'intérieur, et
la butée est formée d'un seul tenant avec chacune de la pluralité de pièces de moule.

5. Moule pour réseau d'éléments selon la revendication 1,
dans lequel le moule présentant la butée fournie à l'intérieur de celui-ci inclut une pluralité de pièces de moule, chacun présentant la portion de moulage d'éléments et un substrat présentant la pluralité de pièces de moule agencées à l'intérieur, et
la butée est fixée sur le substrat.

6. Moule pour réseau d'éléments selon la revendication 5,
dans lequel les butées sont fournies sur le substrat de manière à diviser une région sur le substrat en fonction de l'agencement de la pluralité de pièces de moule, et
chacune de la pluralité de pièces de moule est positionnée par les butées.

7. Moule pour réseau d'éléments selon la revendication 6,
dans lequel les butées sont des cloisons entourant chacune de la pluralité de pièces de moule.

8. Moule pour réseau d'éléments selon la revendication 7,
dans lequel une portion de découpe est fournie au niveau de l'extrémité avant d'une portion de chaque cloison entre des pièces de moule adjacentes.

9. Moule pour réseau d'éléments selon l'une quelconque des revendications 5 à 8,
dans lequel les caractéristiques de dilatation thermique/rétrécissement de la butée (432) sont égales aux caractéristiques de dilatation thermique/rétrécissement de la pièce de moule.

10. Moule pour réseau d'éléments selon l'une quelconque des revendications 1 à 9,
dans lequel la butée présente une dépouille.

11. Moule pour réseau d'éléments selon l'une quelconque des revendications 1 à 10,
dans lequel un poli miroir est exécuté sur la surface de la butée.

12. Moule pour réseau d'éléments selon l'une quelconque des revendications 1 à 11,
dans lequel un film présentant une faible affinité avec le matériau de moulage est formé sur la surface de la butée.

13. Moule pour réseau d'éléments selon l'une quelconque des revendications 1 à 11,
dans lequel la butée est fabriquée dans un matériau de faible affinité avec le matériau de moulage.

14. Utilisation d'un réseau d'éléments moulé par le moule pour réseau d'éléments selon l'une quelconque des revendications 1 à 13,
comprenant l'étape consistant à déplacer au moins un des moules (411, 412) afin de comprimer un matériau de résine entre les surfaces de moulage (420, 430), jusqu'à ce que l'extrémité avant de la butée (432) vienne en contact avec la surface de moulage du moule face à la butée.
